# EUROPÄISCHE PATENTANMELDUNG

(11) **EP 0 891 689 A1**
(43) Veröffentlichungstag der Anmeldung: **20.01.1999**
(21) Anmeldenummer: 98113325.9
(22) Anmeldetag: 17.07.1998
(51) Int. Cl.: A01B 59/00, B60D 1/02, F16C 1/22

(54) **Fernbedienung von Anbauteilen**

(30) Priorität: 18.07.1997 DE 29712738 U
(71) Anmelder: SAME DEUTZ-FAHR S.P.A., 24047 Treviglio (Bergamo) (IT)
(72) Erfinder: Nenno, Horst-Josef, 53909 Zülpich-Bürrenich (DE)
(74) Vertreter: Quinterno, Giuseppe

(57) **Zusammenfassung**

Die Erfindung betrifft eine Fernbedienung zum Ent- und Verriegeln von Anbauteilen, wie Anhängekupplung, Anhängevorrichtung und Maschinenteile, vorzugsweise an Traktoren, und landwirtschaftlichen Erntemaschinen von der Fahrerkabine aus, wobei die Fernbedienung ein Zugelement, das lösbar mit einem Hebel des Anbauteils in Wirkverbindung steht, und ein mittels Gewinde und zumindest einer Mutter längenjustierbares Abstützelement aufweist, das in einer Bohrung (24) einer Konsole (25) des Anbauteils angeordnet ist, wobei zur unveränderten Längenjustage beim Trennen und Wiederanbringen der Fernbedienung an dem Anbauteil das Abstützelement in der Bohrung (24) frei beweglich angeordnet und mittels eines Abstützelements an der Konsole (25) abgestützt ist.

## Beschreibung

Die Erfindung betrifft eine Fernbedienung zum Ent- und Verriegeln von Anbauteilen, wie Anhängekupplung, Anhängevorrichtung und Maschinenbauteile, insbesondere nach dem Oberbegriff des Anspruchs 1.

Bei der in der modernen Landwirtschaft üblichen Einmannbedienung von Traktoren und Erntemaschinen ist ein ferngesteuertes Abkuppeln von Anhängern unverzichtbar. Je nach Art und Einsatzfall der Anhänger werden unterschiedliche Anhängevorrichtungen benötigt. Deshalb sind diese zum raschen An- und Abbau ausgebildet. Dabei muß auch die mechanische Fernbedienung gelöst und wieder anmontiert werden. Die dabei erforderliche Nachjustierung derselben ist zeitaufwendig und erfordert den Einsatz von Werkzeugen.

Der Erfindung liegt die Aufgabe zugrunde, eine Fernbedienung für Anbauteile von Traktoren und Erntemaschinen zu schaffen, die einfach und schnell an- und abbaubar ist.

Die Aufgabe wird dadurch gelöst, daß zur unveränderten Längenjustage beim Trennen und Wiederanbringen der Fernbedienung an dem Anbauteil das Abstützelement in der Bohrung frei beweglich angeordnet und mittels eines am Abstützelement fixierten Anschlages an der Konsole abgestützt ist. Der am Abstützelement fixierte Anschlag gestattet einen Ab- und Anbau der Fernbedienung ohne jegliche Einstellarbeit und damit ohne Werkzeug.

Vorteilhaft ist, daß das Zugelement ein Seil und das Abstützelement eine Hülle eines Bowdenzugs sind und daß die Hülle an ihrem anbauteilseitigen Ende ein Gewindeteil aufweist, auf dem eine Mutter und eine Einstellhülse gegeneinander verschraubt sind. Ein Bowdenzug läßt sich in der Fahrerkabine ohne zu stören verlegen und mit der gekonterten Einstellhülse auf die gewünschte Einbaulänge justieren.

Da die Hülle über die Einstellhülse auf der Konsole abstützbar ist, steht sie mit dieser lediglich in Druckkontakt. Dadurch kann sie nach Öffnen der Anhängekuppel und Entspannen des Seils Von Hand von der Konsole abgehoben werden.

Es hat Vorteile, daß die Einstellhülse einen Bund aufweist, der mit Spiel in einer Bohrung der Konsole geführt ist. Auf diese Weise erfährt der Bowdenzug eine Seitenführung in der Konsole und das Gewinde der Hülle einen Schutz.

Dadurch, daß die Bohrung am freien Ende der Konsole einen Längsschlitz von mindestens der Breite des Seils des Bowdenzugs aufweist, kann dessen Seil nach Herausheben des Bundes der Einsteilhülse aus der Bohrung der Konsole und nach Lösen des Seils vom Hebel des Anbauteils durch den Schlitz der Bohrung ohne Werkzeug entnommen werden.

Zum Austausch der Einstellhülse ist es von Vorteil, daß diese einen Längsschlitz von mindestens der Breite des Seils des Bowdenzugs aufweist.

Eine vorteilhafte Ausbildung der Erfindung besteht darin, daß die Fernbedienung einen Bedienungshebel in der Fahrerkabine aufweist, der verriegelbar ist. Auf diese Weise kann ein unbeabsichtigtes oder unerlaubtes Abkuppeln eines Anhängern verhindern werden.

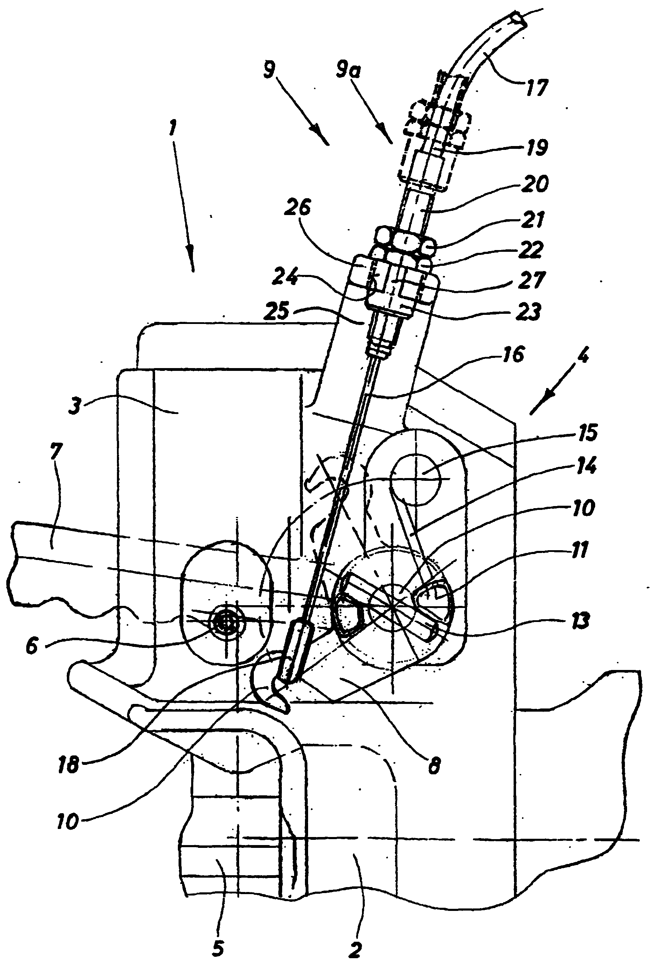

Weitere Merkmale der Erfindung ergeben sich aus der folgenden Beschreibung und der einzigen Figur, die den erfindungsgemäßen Bowdenzug in Einbau- und Ausbaulage (gestrichelt) an einer Anhängekupplung zeigt.

In der Figur ist eine Anhängekupplung 1, mit einem Kupplungsmaul 2 und einem Gehäuse 3 einer Betätigungsvorrichtung 4 für einen Kuppelbolzen 5 dargestellt. Dieser ist durch einen Kuppelstift 6 mit der Betätigungsvorrichtung 4 verbunden. Diese wird durch einen Betätigungshebel 7 direkt oder durch einen Hebel 8 einer Fernbedienung 9 über eine Welle 10 betätigt.

Der Hebel 8 ist auf der Welle 10 gelagert. Er endet in einem Haken 11 und trägt Mitnahmenocken 12. Diese wirken über einen Mitnahmestift 13 der Welle 10 auf die Betätigungsvorrichtung 4. Eine Haarnadelfeder 14, die sich auf einen Bolzen 15 abstützt, führt den Hebel 8 in seine Ausgangsstellung zurück.

Die Fernbedienung 9 weist einen Bowdenzug 9a mit einem Seil 16 und einer Hülle 17 auf. Das Seil 16 besitzt eine Öse 18, die im Haken 11 des Hebels 8 eingehängt ist. Am anbauteilseitigen Ende 19 der Hülle 17 ist ein Gewindeteil 20 vorgesehen, auf dem eine Mutter 21 und eine Einstellhülse 22 gegeneinander geschraubt sind. Die Einstellhülse 22 weist einen Bund 23 auf, der mit Spiel in einer Bohrung 24 einer Konsole 25 geführt ist. Die Bohrung 24 weist am freien Ende 26 der Konsole 25 einen Längsschlitz 27 von mindestens der Breite des Seils 16 des Bowdenzugs 9a auf. Auch die Einstellhülse 22 ist entsprechend geschlitzt und kann dadurch leicht ausgewechselt werden.

Der Bowdenzug 9a endet in eIner nicht dargestellten Fahrerkabine, wo er von einem verriegelbaren Bedienungshebel betätigt wird.

Die erfindungsgemäße Fernbedienung 9 funktioniert folgendermaßen:

Der Bedienungshebel in der Fahrerkabine wird entriegelt und in seine Entkuppelstellung gebracht. Dadurch zieht das Seil 16 den Hebel 10 von seiner Ausgangsstellung in die gestrichelt dargestellte Entkuppelstellung. Durch Verdrehen der Mitnahmenocken 12 und des Mitnahmestifts 13 sowie der Welle 10 hebt die Betätigungsvorrichtung 4 den Kuppelbolzen 5 in seine Entkuppelstellung. Nach Zurücknahme des Bedienungshebels in der Fahrerkabine in seine Ausgangsstellung wird der Hebel 8 durch die Haarnadelfeder 14 in seine Ausgangsstellung zurückversetzt, während der Kuppelbolzen 5 durch eine Arretierung in seiner Entkuppelstellung verharrt. Er wird erst durch eine nicht dargestellte Auslösevorrichtung, die von der Deichselöse betätigt wird, zurückgestellt.

Vor Abbau der Anhängekupplung 1 wird zunächst der Betätigungshebel 7 mit dem Mitnahmestift 13 in Entkuppelstellung gebracht. Dann muß der Hebel 8 von Hand solange verdreht werden, bis die Öse 18 des Seils 16 von dem Haken 11 lösbar ist. Dann kann der Bund 23 der Einstellhülse 22 und das Gewindeteil 20 des Bowdenzugs 9a aus der Bohrung 24 in die gestrichelte Stellung herausgezogen werden, so daß das Seil 16 durch den Längsschlitz 27 ausfädelbar ist. Dabei bleiben der Schraubverband der Mutter 21 mit der Einstellhülse 22 und deren Justierung unberührt, so daß der Bowdenzug 9a nach sei nem Wiedereinsetzen in die Bohrung 24 nicht neu justiert werden muß. Damit kann der Aus- und Einbau der Anhängekupplung 1 ohne Werkzeug und in kurzer Zeit von starten gehen.

## Patentansprüche

1. Fernbedienung zum Ent- und Verriegeln von Anbauteilen, wie Anhängekupplung, Anhängevorrichtung und Maschinenteile, vorzugsweise an Traktoren und landwirtschaftlichen Erntemaschinen von der Fahrerkabine aus, wobei die Fernbedienung ein Zugelement, das lösbar mit einem Hebel des Anbauteils in Wirkverbindung steht, und ein mittels Gewinde und zumindest einer Mutter längenjustierbares Abstützelement aufweist, das in einer Bohrung einer Konsole des Anbauteils angeordnet ist,
**dadurch gekennzeichnet**, daß zur unveränderten Längenjustage beim Trennen und Wiederanbringen der Fernbedienung an dem Anbauteil das Abstützelement in der Bohrung (24) frei beweglich angeordnet und mittels eines Abstützelements an der Konsole (25) abgestützt ist.

2. Fernbedienung nach Anspruch 1,
**dadurch gekennzeichnet**, daß das Zugelement ein Seil (16) und das Abstützelement eine Hülle (17) eines Bowdenzugs (9a) sind.

3. Fernbedienung nach Anspruch 2,
**dadurch gekennzeichnet**, daß die Hülle (17) an ihrem anbauseitigen Ende (19) ein Gewindeteil (20) aufweist, auf dem als Anschlag eine Mutter (21) und eine Einstellhülse (22) gegeneinander verschraubt sind.

4. Fernbedienung nach Anspruch 3,
**dadurch gekennzeichnet**, daß die Hülle (17) über die Einstellhülse (22) auf der Konsole (25) abgestützt ist.

5. Fernbedienung nach Anspruch 4,
**dadurch gekennzeichnet**, daß die Einstellhülse (22) einen Bund (23) aufweist, der mit Spiel in der Bohrung (24) der Konsole (25) geführt ist.

6. Fernbedienung nach einem der vorhergehenden Ansprüche,
**dadurch gekennzeichnet**, daß die Bohrung (24) am freien Ende (26) der Konsole (25) einen Längsschlitz (27) von mindestens der Breite des Seils (16) des Bowdenzugs (9a) aufweist.

7. Fernbedienung nach einem der vorhergehenden Ansprüche,
**dadurch gekennzeichnet**, daß die Einstellhülse (22) einen Längsschlitz von mindestens der Breite des Seils (16) des Bowdenzugs (9a) aufweist.

8. Fernbedienung nach einem der vorhergehenden Ansprüche,
**dadurch gekennzeichnet**, daß die Fernbedienung (9) einen Bedienungshebel in der Fahrerkabine aufweist, der verriegelbar ist.
